# EUROPEAN PATENT APPLICATION

(11) **EP 4 140 607 A1**
(43) Date of publication of application: **01.03.2023**
(21) Application number: 21290052.6
(22) Date of filing: 27.08.2021
(51) Int. Cl.: B09C 1/08

(54) **METHOD FOR THE TREATMENT OF SOILS AND SLURRIES CONTAMINATED BY HEAVY METALS**

(71) Applicant: Holcim Technology Ltd, 5113 Holderbank (CH)
(72) Inventor: Serclerat, Ivan, 38070 St Quentin Fallavier (FR); Tapsoba, Nouffou, 38070 St Quentin Fallavier (FR)
(74) Representative: HGF

(57) **Abstract**

The invention relates to a method for the treatment of heavy metal contaminated soils, wherein the contaminated soil is mixed with a composite binder, wherein the mixed binder is a mineral binder comprising from 50 wt.-% to 70 wt.-% of the source of Magnesium based on MgO as the source of Magnesium and from 30 wt.-% to 50 wt.-% of an aluminate cement.

## Description

The invention relates to a method for the treatment of soils and slurries contaminated by heavy metals.

Heavy metals in soils are a common problem. The soils can be contaminated by a natural existence of heavy metals in the mineral constituents of the soil or/and anthropogenic sources like industrial waste.

It is known that heavy metals may be harmful to a multitude of species. In particular the soluble species of heavy metals are known to be absorbed by plants and to contaminate water, in particular ground water used for agriculture or drinking water.

Therefore, it is a common object to reduce the presence of soluble forms of heavy metals in soils. It is further a common object to remediate contaminated sites.

Pertaining to the remediation of contaminated sites, various attempts have already been made.

The German Federal Institute for agriculture and food for example was informing farmers about the possibility of binding heavy metals with limestone to reduce the concentration of heavy metals in plants and other agricultural products.

Another standard alternative to treat soils contaminated by heavy metals is a so-catled "soil washing".

Various methods for remediation of soils by rinsing of the heavy metals are known, both in situ and ex situ.

The ex-situ method allows washing-off the heavy metals or treating the soil with chemical reagents or the excavated soil in an electrochemical way.

The disadvantage is, that it takes a long time, that it needs excavation or washing-out of the soil and is therefore in particular not usable under buildings.

Attempts have already been made to stabilize the heavy metals in the soil.

From M. Lambert, B. A. Leven, R. N. Green "New methods of cleaning-up heavy metals in soils and water", Hazardous Substance Research Centers, environmental science in technology briefs for citizens, it is known, that excavation and physical removal of the soil is the oldest remediation method for contaminated soil. It is still in use at many locations including residential areas contaminated with for example lead. It is mentioned that the excavation has as the advantage of the complete removal of the contaminants and the relatively rapid clean-up of a contaminated site. These methods include moving of the contaminants to a different place where they must be monitored. It is further mentioned that heavy metals can be left on site and treated in a way that reduces or eliminates the ability to negatively affect human health and the environment. This process is called stabilization. It is pointed out that eliminating the bio availability of heavy metals on site has many advantages over excavation, wherein one way of stabilizing heavy metals consists of adding chemicals to the soil that cause the formation of minerals containing the heavy metals in a form that is not easily soluble or absorbed by plants, animals or people. This in situ fixation of the pollutants does not disrupt the environment or generate hazardous wastes. One example of in situ fixation of heavy metals involves adding phosphate compounds as a soil treatment that has high amounts of heavy metals in particular of the heavy metal lead. Further, it is pointed out that by phyto extraction, heavy metals can be absorbed from a soil and bound in plants.

From "Remediation of heavy metal contaminated soil by a symmetrical alternating current electro chemistry", Yin W. Xu et al in nature communications 10, article no. 2440 (2019), a remediation method composed of a recirculating soil washing system is known, with an electrochemical filtration device. The electrochemical filtration device should achieve high degrees of heavy metals removal from contaminated soil under a range of different concentrations. This remediation method is based on a key concept of asymmetrical alternating current electrochemistry (AACE) which enables recycling of soil watering chemicals and eliminates second pollution. In this method the soil is excavated from contaminated sites to a treatment cylinder with two ethylenediaminetetraacetic acetic acid (EDTA) solution reservoir tanks attached. The EDTA is pumped through the contaminated soil column. The soil-absorbed metal cations are mobilized by forming heavy metal EDTA complex and transported to the AACE filter.

From "in situ immobilization of heavy metals in soils using natural clay minerals", Senat Murtic, et al in "Open access agricultural journals", Czech Academy of Agricultural Science 66, pages 632 - 638, it is known to use zeolites and pyrophyllite or clay materials to reduce the mobility of heavy metals in soil.

Further, gellant extraction of heavy metals from contaminated soils is known using gelating agents to extract the heavy metal contaminations.

From Zhengtao Shen et al "Temporal effect of MgO reactivity on the stabilization of lead contaminated soil", environmental international, volume 131, October 2019, it is known, that solidification/stabilization originated in the 1970s for hazardous waste management, wherein it has been discovered that the effectiveness of ordinary Portland cement based solidification/stabilization may diminish under the field aging processes, such as acid rain fall, wetting and drying cycles, sawing and freezing cycles and ultraviolet radiation.

It is mentioned, that in comparison to Portland cement, magnesium oxide (MgO) is more resistant to field aging, having significantly higher durability. Besides the lower energy consumption of calcinating of Mg-bearing carbonates in comparison to Portland cement, it is mentioned that the hydration products of MgO (Mg(OH)₂) are much less soluble than those of Portland cement. It is pointed out, that the hydration of MgO to Mg(OH)₂ plays a vital role in the stabilization process which immobilizes heavy metals through physical encapsulation, adsorption and precipitation reactions.

The state of the art present several technologies or binders to stabilize heavy metal cations, but there is a lack of solution to treat highly soluble oxyanions in the form MeOxn-

It is an object of the present invention to provide a composite binder composition which is capable of binding heavy metals in a sustainable and cost effective manner in solidification of soils contaminated with said heavy metals.

The object is met by way of a composite binder which is mixed with the contaminated soil to stabilize the heavy metals.

The heavy metals are oxyanionic species having the general formula MeOₓⁿ⁻ known to be readily soluble and for which regulatory levels of leachable content are allowed. A non-exclusive list of these ions includes CrO₄²⁻, MoO₄²⁻ , SbO₃⁻, SeO₄²⁻ .

Other heavy metals, such as As, Cd, Cu, Hg, Mo, Pb, or their oxides may be present in the soil.

According to the invention the relatively low ratio of binder to soil is sufficient to bind said heavy metals in a long-lasting and sustainable way.

The composite binder is used at a relatively low dosage of from 2 to 7 wt.-%, preferably from 3.0 to 5.0 wt.-% based on the weight of the dry contaminated soil.

The composite binder comprises at least of from 10 wt.-% to 90 wt.-%, preferentially from 50 wt.-% to 70 wt.- %, of a source of magnesium oxide (expressed in weight of the oxide MgO) and from 90 wt.-% to 10 wt.-%, preferentially from 30 wt.-% to 50 wt.-%, of an aluminate cement.

The source of magnesium may be any source of magnesium but preferably is magnesium oxide or magnesium hydroxide.

The aluminate cement is preferably a calcium aluminate cement with an Al₂O₃ content from 30 to 50 wt.-%, preferably from 30 to 40 wt.-%.

The calcium oxide (CaO) content in the aluminate cement is from 40 wt.-% to 55 wt.-% and further preferred from 45 wt.-% to 50 wt.-%.

The aluminate cement comprises at least 30 wt.-% of C₁₂A₇ (Yeelemite).

As a further and additional component the composite binder may comprise a cationic quaternary ammonium polymer.

Further, optionally the composite binder may comprise as an additional component a reducing agent such as sodium bisulfide.

For example, a binder may consist of 33,3 wt.-% of said aluminate cement and 66.7 wt.-% MgO.

If for example a cationic quaternary ammonium polymer is added, the binder may comprise three parts of calcium aluminate cement, one part MgO and 0,5 parts of the ammonium polymer.

Surprisingly it was found that calcium aluminate and sodium bisulfide are particularly advantageous for treating soils contaminated with heavy metals, as it appears that MgO or magnesium increases this effect. Thereby the composite binder of the present invention can effectively reduce the amount of heavy metals that are eluted from polluted soils. As a further advantage a relatively low amount of binder is needed.

The Invention pertains to a method for the treatment of heavy metal contaminated soils, wherein the contaminated soil is mixed with a composite binder, wherein the composite binder is a mineral binder comprising from 50 wt.-% to 70 wt.-% of the source of Magnesium based on MgO as the source of Magnesium and from 30 wt.-% to 50 wt.-% of an aluminate cement.

In an embodiment the contaminated soil is mixed with from 2 to 7 wt.-% of the composite binder, preferably with from 3 to 5 wt.-% of the composite binder, based on the total weight of the dry contaminated soil.

In an embodiment the aluminate cement is a calcium aluminate cement, wherein the calcium aluminate cement has an alumina (Al2O3) content of from 30 to 50 wt.-%, a calcium oxide (CaO) content of from 40 to 55 wt.-% and wherein the calcium-aluminates in the calcium aluminate cement consist at least of 30 wt.-% C12A7).

In an embodiment further a cationic quaternary ammonium polymer is added to the composite binder as a complex-forming agent.

In an embodiment the complex-forming agent is added in amounts of from 0.25 to 1.5 wt.-% based on the total weight of the contaminated soil.

In an embodiment a reducing agent, e.g. a sodium bisulfide, is further added to the composite binder.

In an embodiment the reducing agent is added in amounts of from 0.25 to 1.5 wt.-% based on the total weight of the contaminated soil.

In an embodiment the composite binder is dry mixed with the contaminated soil or mixed with a contaminated slurry wherein the composite binder is homogenized with the contaminated soil or slurry.

In an embodiment the composite binder is mixed with the contaminated soil and then a predetermined amount of water is added.

In an alternative the invention pertains to a composite binder for mixing with a soil contaminated with heavy metals, e.g. to perform the method of any one of the preceding claims, wherein the composite binder is a mineral binder comprising of from 50 wt.-% to 70 wt.-% of a source of Magnesium based on magnesium oxide (MgO) as the source of Magnesium and from 30 wt.-% to 50 wt.-% of an aluminate cement.

In an embodiment the aluminate cement is a calcium aluminate cement, wherein the calcium aluminate cement has an alumina (Al2O3) content of from 30 to 50 wt.-% and a calcium oxide (CaO) content of from 40 to 55 wt.-% and wherein the calcium aluminates in the calcium aluminate cement comprise consist at least of 30 wt.-% C12A7 .

In an embodiment the composite binder further comprises a cationic quaternary ammonium polymer as a complex-forming agent.

In an embodiment the composite binder comprises the complex-forming agentin an amount of from 0.25 and 1.5 wt.-% based on the total weight of the contaminated soil.

In an embodiment the composite binder further comprises a reducing agent, preferably a sodium bisulfide.

In an embodiment the binder comprises the reducing agent in an amount of from 0.25 to 1.5 wt.-% based on the total weight of the contaminated soil.

The invention is further explained by examples.

The examples are shown in the accompanied drawings which show:

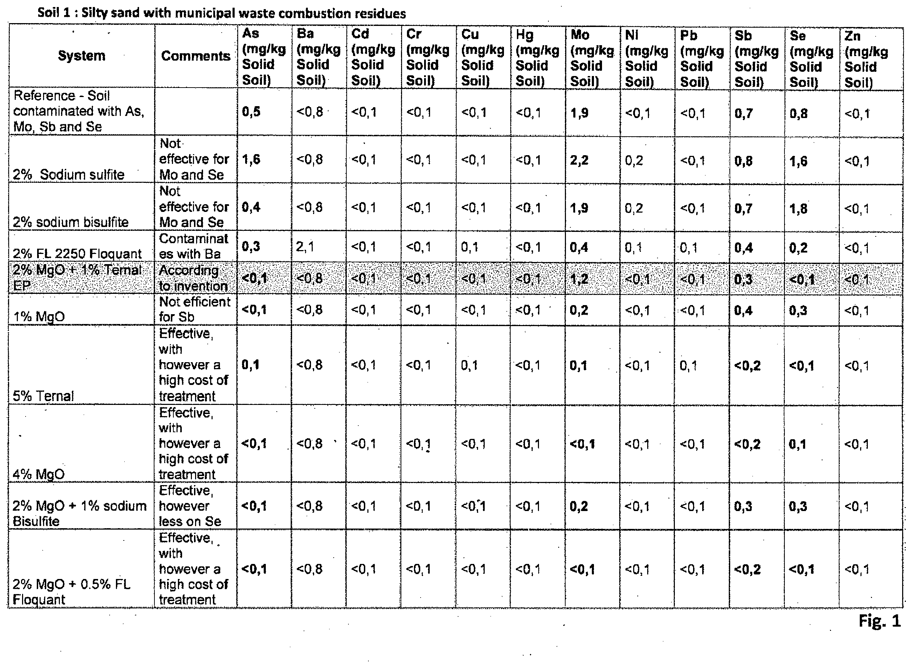

- Figure 1:: a table showing data of a first soil treated with different ingredients,

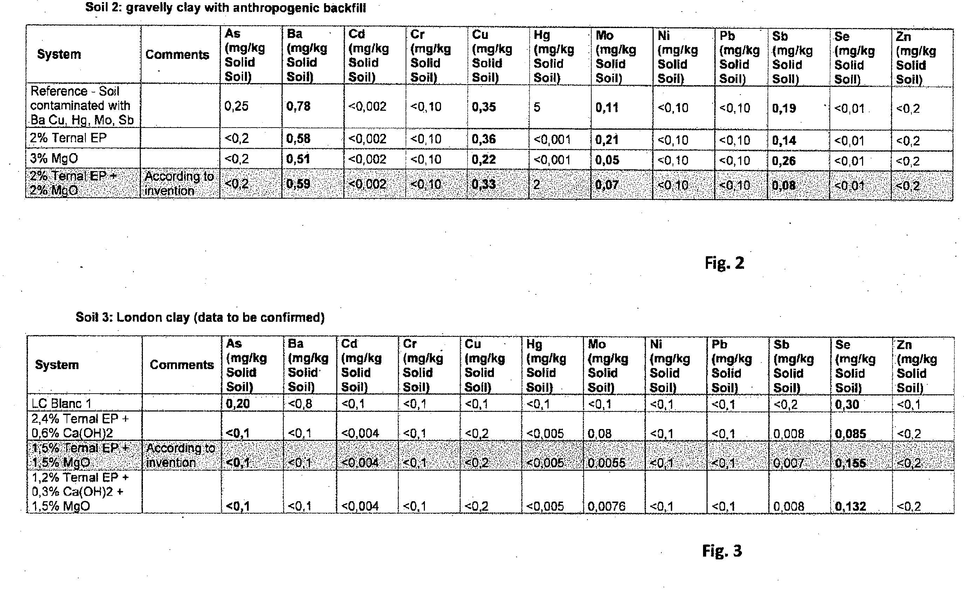

- Figure 2:: a table showing data of a second soil treated with different ingredients,
- Figure 3:: a table showing data of a third soil treated with different ingredients and mixtures,

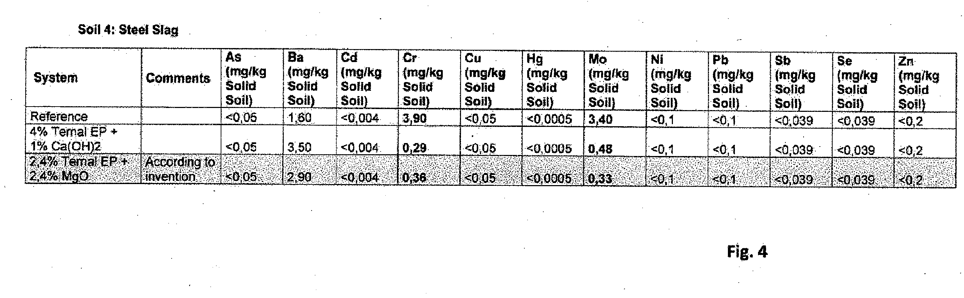

- Figure 4:: a table showing data of a steeled slag treated with different ingredients,

To show the advantage of the invention different contaminated soils or wastes were treated according to the invention and for reference treatments not according to the invention were carried out. The nature and composition of contaminated soil or waste can be extremely variable. The examples have been chosen accordingly.

The soils which have been used in the examples are:
- Silty sand which is contaminated with municipal waste combustion residue,
- Gravely clay with ant organic backfills
- Gravely sand soil with ant organic backfills
- Clay
- Steel slag contaminated with chromium and molybdenum.

The binder was adapted to the soil and the contamination.

For the preparation of the tests the soil was mixed with the predetermined binder amount with a Perrier mixer. After the treatments the treated soil was sieved at 4 mm and kept in a sealed bag. The curing times were 2 hours, 1 day, 7 days and 2 months. The leaching test is done according to the standard NF EN 12457-2, 12/2002 for the curing times mentioned above.

The results are shown in the tables of the Figures,

The first soil which was treated is a silty sand with municipal waste combustion residues. The soil is mainly contaminated with As, Mo, Sb and Se. The soil was treated with different ingredients.

As shown, sodium sulfate or sodium bisulfite as well as magnesium oxide alone have some disadvantages,

For example, a sodium sulfite at 2 wt.% is not effective for molybdenum and selenium. A mixture with 2 wt.% of an ammonium polymer as complex-forming agent was even ineffective as it contaminates with barium. A mixture with 1 wt.% magnesium oxide was not efficient for Sb, wherein 5 wt.% of an aluminum cement as well as 4 wt.% of magnesium oxide were chemically active but too cost intensive for an effective treatment. A mixture with 2 wt.% MgO and 1 wt. % sodium bisulfide was relatively effective but not effective enough on Se.

A mixture of 2 wt.% MgO and 0,5 wt. % of an ammonium polymer complex-forming agent were effective but too costly.

According to the invention a mixture with 2 wt.% MgO and 1 wt. % of a calcium aluminate cement was used. As it can be derived from the table the mixture according to the invention is not for every metal the best performing choice but is a cost-effective measurement to keep the values of all heavy metals below the allowed values.

The next example shows a soil contaminated with Ba, Cu, Hg, Mo, Sb. This soil was treated with MgO and Aluminate Cement respectively. The amount of MgO was 3 wt.% the amount of Aluminate Cement was 2 wt. %. All wt. % are based on the dry mass of the soil.

It appears that the single constituents do have an effect on the solubility of the heavy metals but a mixture according to the invention with 50 wt.% MgO and 50 wt. % Aluminate cement performs best for Mo and Sb.

In example 3 a source of arsenic and selenium are treated with a mixture according to the invention made from 50 wt, % aluminate cement and 50 wt. % magnesium oxide wherein in this example 1.5 wt.-% aluminate cement and 1.5 wt.-% MgO are used based on the total weight of the dry soil.

As a comparative example the fourth example uses a steel slag wherein a mixture according to the invention with 2.5 wt.-% aluminate cement and 2.4 wt.-% MgO based on the total weight of the steel slag is doing very well, especially in the binding of Cr and Mo. Although, a mixture of 4 % aluminate cement and 1 % Ca(OH)₂ performs a little bit better with chromium, the overall performance of the mixture according to the invention is very good and the mixture according to the invention is relatively inexpensive.

The invention provides for a composite binder which is an inexpensive way to treat soils which are contaminated by one or several heavy metals.

According to the invention, the composite binder at least comprises said aluminate cement and said MgO wherein the ratio between the aluminate cement and the MgO can be from 3:1 to 1:3.

The aluminate cement has an alumina (Al₂O₃) content of from 30 to 50 wt.-%, from 40 to 55 wt.-% CaO wherein at least 30 wt.-% of the calcium aluminate is C₁₂A₇.

Preferably the composite binder comprises from 50 wt.-% to 70 wt.-% of a source of magnesium oxide expressed in wt.-% of MgO and from 30 wt.-% to 50 wt.-% of said aluminate cement.

This said composite binder is used at relatively low dosages of from 2 to7 wt.-%, preferably from 3 to 5 wt.-% based on the weight of the dry contaminated soil.

As shown by the examples the composite binder is in particular useful for binding the oxides of chromium, molybdenum, selenium and Sb.

Other constituents in the composite binder can be selected : sulfide salts which reduce the oxydation level of the oxyanions, or complex-forming agents like ammonium polymers.

The composite binder according to the invention achieves effective reduction of the amount of said heavy metals that can be leached from polluted soils.

## Claims

1. Method for the treatment of heavy metal contaminated soils, wherein the contaminated soil is mixed with a composite binder, wherein the composite binder is a mineral binder comprising from 10 wt.-% to 90 wt.-%, preferentially from 50 wt.-% to 70 wt.-% of the source of Magnesium based on MgO as the source of Magnesium and from 90 wt.-% to 10 wt.-%, preferentially 30 wt.-% to 50 wt.-%, of an aluminate cement.

2. Method according to claim 1, wherein the contaminated soil is mixed with from 2 to 7 wt.-% of the composite binder, preferably with from 3 to 5 wt.-% of the composite binder, based on the total weight of the dry contaminated soil.

3. Method according to claim 1 or claim 2, **characterized in that** the aluminate cement is a calcium aluminate cement, wherein the calcium aluminate cement has an alumina (Al₂O₃) content of from 30 to 50 wt.-%, a calcium oxide (CaO) content of from 40 to 55 wt.-% and wherein the calcium-aluminates in the calcium aluminate cement consist at least of 30 wt.-% C₁₂A₇.

4. Method according to claims 1 to 3, wherein further a cationic quaternary ammonium polymer is added to the composite binder as a complex-forming agent.

5. Method according to claim 4, wherein the complex-forming agent is added in amounts of from 0.25 to 1.5 wt.-% based on the total weight of the contaminated soil.

6. Method according to any one of the preceding claims, wherein a reducing agent, e.g. a sodium bisulfide, is further added to the composite binder.

7. Method according to claim 6, wherein the reducing agent is added in amounts of from. 0.25 to 1.5 wt.-% based on the total weight of the contaminated soil.

8. Method according to any one of the preceding claims, wherein the composite binder is dry mixed with the contaminated soil or mixed with a contaminated slurry wherein the composite binder is homogenized with the contaminated soil or slurry.

9. Method according to any one of the preceding claims, wherein the premixed binder is mixed with the contaminated soil and then a predetermined amount of water is added.

10. composite Binder for mixing with a soil contaminated with heavy metals, e.g. to perform the method of any one of the preceding claims, wherein the composite binder is a mineral binder comprising of from 50 wt.-% to 70 wt.-% of a source of Magnesium based on magnesium oxide (MgO) as the source of Magnesium and from 30 wt.-% to 50 wt.-% of an aluminate cement.

11. Binder according to claim 10, **characterized in that** the aluminate cement is a calcium aluminate cement, wherein the calcium aluminate cement has an alumina (Al₂O₃) content of from 30 to 50 wt.-% and a calcium oxide (CaO) content of from 40 to 55 wt.-% and wherein the calcium aluminates in the calcium aluminate cement comprise consist at least of 30 wt.-% C₁₂A₇.

12. Binder according to claim 10 or claim 11, wherein the composite binder further comprises a cationic quaternary ammonium polymer as a complex-forming agent

13. Binder according to any one of the claims 10 to 12, wherein the composite binder comprises the complex-forming agent in an amount of from 0.25 and 1.5 wt.-% based on the total weight of the contaminated soil.

14. Binder according to any one of claims 10 to 13, wherein the composite binder further comprises a reducing agent, preferably a sodium bisulfide.

15. Binder according to claim 14, wherein the binder comprises the reducing agent in an amount of from 0.25 to 1.5 wt.-% based on the total weight of the contaminated soil.
